# EUROPEAN PATENT SPECIFICATION

(11) **EP 0 803 848 B1**
(45) Date of publication and mention of the grant of the patent: **06.02.2002**
(21) Application number: 97106577.6
(22) Date of filing: 21.04.1997
(51) Int. Cl.: G08B 3/10

(54) **Radio selective calling receiver and calling method**
Selektivfunkrufempfänger und Rufverfahren
Récepteur d'appel sélectif radio et procédé d'appel

(30) Priority: 23.04.1996 JP 10141896
(43) Date of publication of application: 29.10.1997
(73) Proprietor: NEC CORPORATION, Tokyo (JP)
(72) Inventor: Yamazaki, Yasuyuki, c/o NEC Shizuoka, Ltd., Kakegawa-shi, Shizuoka (JP)
(74) Representative: VOSSIUS & PARTNER

(56) References cited:
- EP-A- 0 499 247
- US-A- 4 010 461

## Description

This invention relates to a radio selective calling receiver and particularly relates to re-calling announcing function of a radio selective calling receiver.

### Description of the Related Art

In the conventional radio selective calling receiver, when a receiver receives a message, the received message is displayed on LCD and also LED flickers for attention to calling. The calling announcement is reset after a certain time automatically if a user does not reset it. A message displayed on LCD is stored in RAM as a unconfirmed message. The CPU checks the existence of unconfirmed message periodically, and when there is an unconfirmed message, the receiver displays the re-calling announcement which is different from the calling announcement.

A radio selective calling receiver of this sort is disclosed in Japanese Patent Laid-Open No. Hei 4-273727 (JP-A-04-273727).

In the re-calling announcing function of the conventional selective calling receiver, all the unconfirmed message are involved regardless of the significance of the message. The receiver activates re-calling when the receiver receives a message which is not so significant for the receiver holder as the holder must confirm it immediately, and the re-calling consumes the power of a battery. Such function is useful when a user does not hold it and can not be aware of the re-calling, however, the receiver holder can stop the calling without confirming of the message with only confirming the calling, or the receiver confirms the message but considers to call-back later and can forget it after all.

In some cases, a message transmitter transmits a message to a receiver holder for requesting an urgent call-back, but the transmitter does not receive call-back from the receiver holder, and can not know whether the receiver holder receives the message and confirms it, then transmits the same message many times.

US-A-4 010 461 relates to an alerting system with dual-address memory. A dual address paging receiver comprises page memory for automatically storing a page in the mode addressed if the user does not reset the receiver within the prescribed time interval after an alert signal is started. After a page is stored it can be recalled in the mode addressed from page memory by operating the reset button. The receiver provides two different kinds of alert signals depending upon the mode in which it is addressed.

It is the object of the present invention to provide a radio selective calling receiver and a calling method having a function that a message transmitter can let the receiver holder to recognize the urgency of the message and gets a relief from the concern that the receiver holder does not confirm the message. It is the other object of the present invention to provide a radio selective calling receiver and a calling method capable of operating the re-calling only for significant message and preventing the meaningless consumption of power of a battery. These objects are achieved with the features of the invention which is defined in the claims.

A radio selective calling receiver of the present invention includes an ID identification circuit for performing calling announcing operation with the first sound pattern when the address signal which coincides with the calling number of the receiver is identified in the received radio signal, a message identification circuit for analyzing the message signal subsequent to the calling number of the receiver to output it as a message data, for performing auto-resetting to stop said announcing operation automatically when a reset operation input is not detected within a previously set time during the announcing operation, and for storing the message data in a memory as a unconfirmed message, a re-calling identification circuit for identifying whether the radio signal includes a signal for re-calling control, and a re-calling circuit for performing recalling operation periodically with the second sound pattern which is different from the first sound pattern when the signal for re-calling control is identified and the received message is auto-reset.

The re-calling control circuit performs re-calling operation of the confirmed message periodically with the third sound pattern different from both first and second sound patterns after the message is confirmed until the re-calling of the message is canceled.

The calling announcing method of the radio selective receiver of the present invention is defined in claim 2. An announcing operation with the first sound pattern is performed when an address signal which coincides with the calling number of the receiver is identified in the received radio signal, an auto-resetting is performed for stopping automatically said announcing operation, the received message is stored in the memory as an unconfirmed message, the existence of this unconfirmed message is announced periodically with a time interval prescribed previously, and the re-calling announcing operation is performed periodically when the signal for re-calling control is identified in the radio signal for announcing the existence of the reset unconfirmed message with the second sound pattern different from the first sound pattern.

The re-calling announcing operation is performed periodically continuously after said message is confirmed until the re-calling of the message is canceled with the third sound pattern different from both first and second sound patterns.

### BRIEF DESCRIPTION OF THE DRAWINGS

These and other objects, features and advantages of this invention will become more fully apparent from the following detailed description taken with the accompanying drawings in which;
FIG. 1 is a block diagram of a preferred embodiment of the radio selective calling receiver of the present invention,
FIG. 2 is a diagram for illustrating the structure of transmitted message signal of the preferred embodiment of the present invention,
FIG. 3 is a flowchart for describing the sequence of the calling method in the preferred embodiment of the radio selective calling receiver of the present invention, and
FIG. 4 is a flowchart for describing the sequence of the calling method in the preferred embodiment of the radio selective calling receiver of the present invention.

### DESCRIPTION OF THE PREFERRED EMBODIMENTS

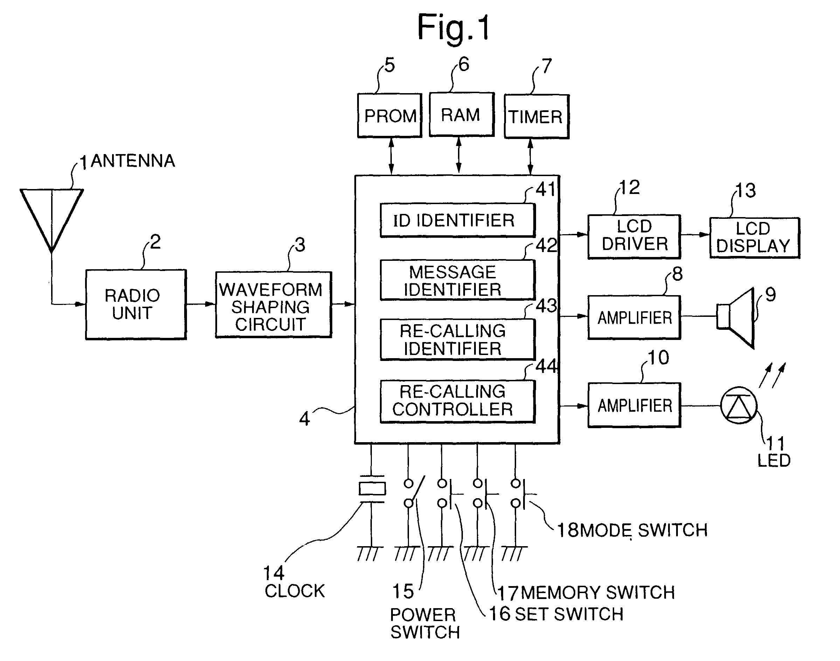

In FIG. 1 which shows a radio selective calling receiver preferably a pager, an antenna 1 receives a transmitted radio signal. A radio circuit 2 amplifies and demodulates the radio signal received by the antenna 1. A waveform shaping circuit 3 converts the demodulated signal to a digital signal which the subsequent decoder 4 can read.

PROM 5 is a read only memory, and stores the selective calling number of the receiver. RAM 6 stores received messages. A timer 7 sets previously the time interval of calling.

The decoder 4 is provided with ID identifier 41, message identifier 42, re-calling identifier 43, and re-calling controller 44. The ID identifier compares the data signal outputted from the waveform shaping circuit 3 with the calling number of the receiver written previously in the PROM 5. If both signal and number coincide, the ID identifier 4 outputs an alert signal of normal first sound pattern to a amplifier 8 and an amplifier 10 to let the radio selective calling receiver holder to recognize the calling.

The message identifier 42 analyzes the message signal following to the calling number of the receiver, and outputs the message data to LCD driver 12. If a reset operation input is not detected within a time previously set during the recognizing operation, the message identifier 42 sets the auto-rest for stopping automatically the recognizing operation, and stores the message data in RAM 6 as a unconfirmed message. The above-mentioned time previously set is stored in, for example, the timer. An unconfirmed message is stored, for example, with a flag for indicating that this message is an unconfirmed message.

The re-calling identifier 43 detects whether the received radio signal contains a signal for re-calling control. If the re-calling controller 44 detects the signal for re-calling control and the auto-reset of the received message is set, the re-calling controller 44 generates the second sound pattern different from the first sound pattern periodically for re-calling. Further, the re-calling controller 44 generates the third sound pattern different from both first and second sound patterns periodically for re-calling after the confirming of the received message until the re-calling for this message is canceled.

The amplifier 8 amplifies a speaker alert signal outputted from the decoder 4 and drives a speaker 9. The sounding of the alert sound announces a calling to the radio selective calling receiver holder. The amplifier 10 amplifies LED alert signal outputted from the decoder 4. The light generation of the LED 11 announces a call to the radio selective calling receiver holder. The speaker 9 and LED 11 announce a calling with usual sound mode.

A clock 14 is a clock generating oscillator for driving the decoder 4 and timer 7. A power switch 15 is a switch for supplying power to respective circuits. A set switch 16 is a push switch for stopping the alert sound, for starting the display for confirming a message, and for resetting the re-calling function. A memory switch 17 is a push switch for invoking messages successively to the LCD display if a plurality of received messages are stored. A mode switch 18 is a push switch for changing to the setting mode for selecting the protection of the message, erasing, or cancel of re-calling function by pushing it while the received massage is displayed on the LCD display 13.

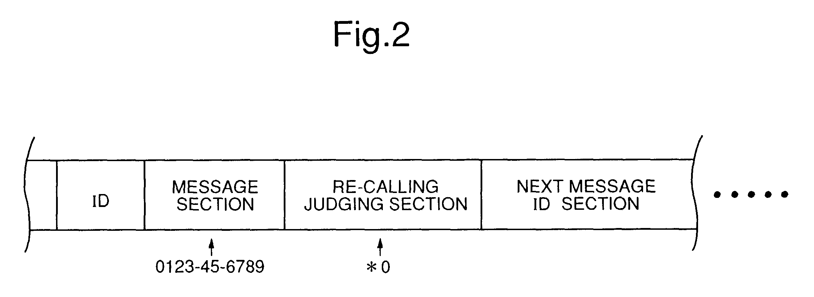

FIG. 2 shows a preferred example of a message signal transmitted from the transmitter if the message transmitter selects the re-calling. This signal is composed of the ID section for indicating the address of this receiver, the message section for indicating the message itself, and the re-calling judging section for indicating the existence of a request for re-calling followed by the next message ID section. The message transmitter adds, for example, "* (asterisk)0" subsequent to the message of, for example, 0123-45-6789 on a telephone, then a re-calling signal (re-calling identification number) is added in the transmitted radio signal, and the receiver identifies the message to be a message with re-calling when the receiver receives the signal.

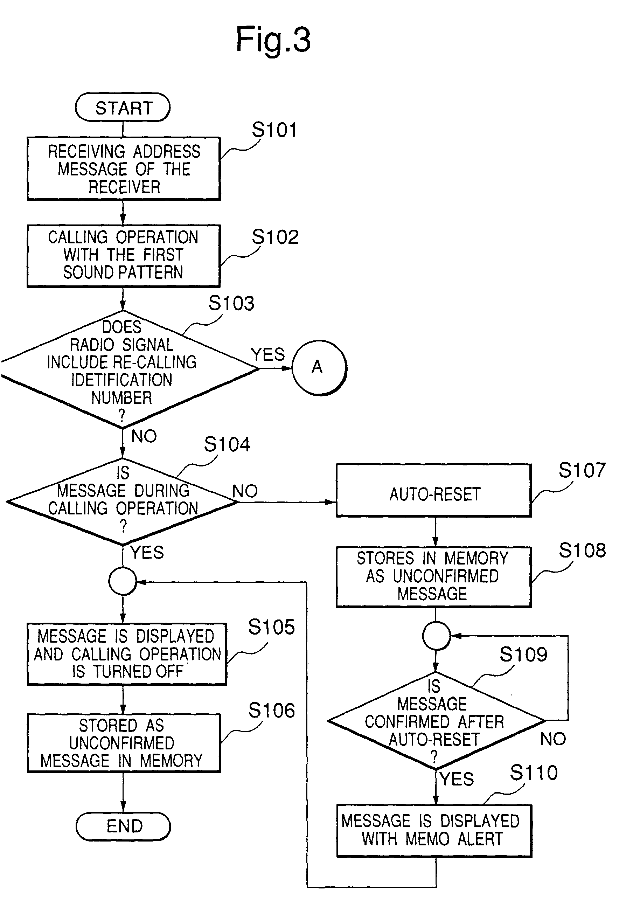

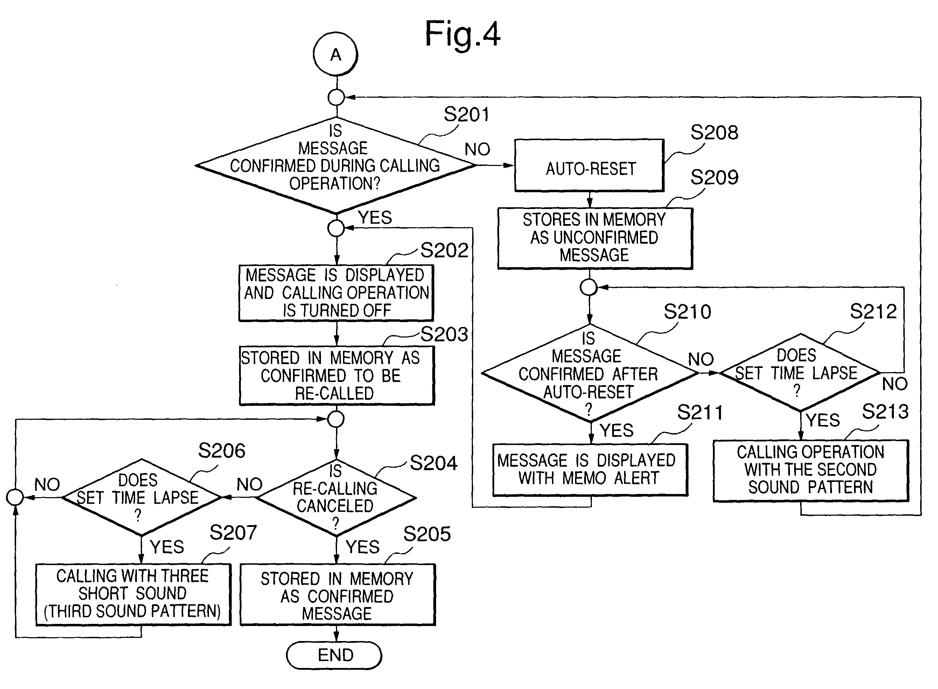

FIG. 3 and FIG. 4 show flow charts of the re-call announcing operations in the radio selective calling receiver of the present invention. The detail of the operation is described herein under referring to FIG. 1.

Upon switching the power switch 15 ON, the receiver becomes in waiting condition for the calling number (address) of the receiver. Upon receiving the calling number of the receiver under this condition (step S101), the receiver sounds with the normal first calling sound pattern, and displays the received message on the LCD display for indicating calling (S102).

The case that the re-calling identification number is not included in the received radio signal (S103, NO) is described herein under. By pressing down the set switch 16 during the calling operation (S102), the calling operation is turned OFF, and the message is confirmed (S104, YES), then by pushing down the set switch 16 again, the message displayed on the LCD display 13 is turned off (S105), and stored in the memory (RAM) as a confirmed message (S106).

If the set switch 16 is not pushed down (S104, NO) during the calling operation (S102), auto-resetting is performed (S107), and the received message is stored in the memory as a unconfirmed message (S108). Afterwards, when the message is confirmed by pushing down the set switch 16 (S109, YES), the message is displayed on the LCD display 13, and simultaneously a sound announcement (referred to as memo alert hereinafter) is performed to announce that the message is an unconfirmed message (S110). The memo alert is desirably different from the first sound pattern. Next, the case that the re-calling identification number is included in the received radio signal (S103, YES) is described herein under. By pushing down the set switch 16 during the calling operation (S102), the message is confirmed (S201), then the calling operation is turned OFF, and the message displayed on the LCD display 13 is turned off (S202) and stored in RAM 6 (S205) as a confirmed massage to be re-called. Afterwards, when the re-calling is canceled by switch operation (S204), the message is stored in RAM 6 (S205) and the sequence is brought to an end.

If the re-calling is not canceled (S204), the calling operation (S207) is performed after a time previously set on the receiver by sounding three times short sound (third sound pattern) (S207), which is not so loud as the receiver do not feel noisy, for letting the receiver to recognize that the message is a message including the re-calling identification number, and thereafter the calling operation is repeated periodically until the re-calling is canceled.

On the other hand, if the message is confirmed by pushing down of the set switch 16 (S201) during the calling operation (S102), the auto-resetting is performed (S208) and the received message is stored in RAM 6 (S209) as a unconfirmed message. Afterwards, when the message is confirmed by pushing down of the set switch 16 (S201), the message is displayed on the LCD display with memo alert (S211), and when the memo alert is turned OFF and the message is turned off by pushing down of the set switch 16 (S202), the message is stored in RAM 6 as a confirmed message for re-calling (S203). Thereafter, the calling operation of three short sound is repeated (S207) periodically with a time interval set on the receiver (S206) until the re-calling is canceled (S204).

If the message is not confirmed (S210) by pushing down of the set switch 16 after auto-resetting, after a time set on the receiver (S212), the sound (second sound pattern), which is different from both normal sound pattern (S102) and three short sound calling (third sound pattern), announces the existence of unconfirmed message (S213) and the sequence returns to the step 201.

According to the present invention as described hereinbefore, a message transmitter transmits a re-calling identification signal with a message, thereby, the re-calling operation of the receiver is commanded and controlled by the transmitter, and the message transmitter can let the receiver holder to recognize the urgency, therefore, the message transmitter can get a relief from the concern of un-confirmation of the message, further, only the significant message is re-called, therefore needless consumption of battery power is prevented.

While the invention has been described with reference to specific embodiments thereof, it will be appreciated by those skilled in the art that numerous variations, modifications, and embodiments are possible, and accordingly, all such variations, modifications, and embodiments are to be regarded as being with in the scope of the invention, which is defined in the claims.

## Claims

1. A radio selective calling receiver comprising an ID identification means (41) for performing calling announcing operation with a first sound pattern when the address signal which coincides with the calling number of the receiver is identified in the received radio signal, a message identification means (42) for analyzing the message signal subsequent to the calling number of the receiver to output it as a message data, for performing auto-resetting to stop said announcing operation automatically when a reset operation input is not detected within a previously set time during said announcing operation, and for storing said message data in a memory as a unconfirmed message, a re-calling identification means (43) for identifying whether said radio signal includes a signal for re-calling control, and a re-calling control means (44) for performing recalling operation periodically with a second sound pattern which is different from said first sound pattern when the signal for re-calling control is identified and the received message is auto-reset,
wherein said re-calling control means (44) performs re-calling operation of the confirmed message periodically with a third sound pattern different from both first and second sound patterns after the message is confirmed until the re-calling of the message is canceled.

2. A calling announcing method of the radio selective receiver comprising the steps of performing an announcing operation with a first sound pattern when an address signal which coincides with the calling number of the receiver is identified in the received radio signal, performing an auto-resetting for stopping automatically said announcing operation when a reset operation input is not detected within a previously set time during said announcing operation,storing the received message in the memory as an unconfirmed message, identifying whether said radio signal includes a signal for re-calling control, performing the re-calling announcing operation periodically with a second sound pattern different from said first sound pattern when the signal for re-calling control is identified in said radio signal and the received message is auto-reset, and performing the re-calling announcing operation periodically continuously after said message is confirmed until the re-calling of the message is canceled with a third sound pattern different from both first and second sound patterns.

## Patentansprüche

1. Selektivfunkrufempfänger mit einer ID-Erkennungsschaltung (41) zum Abgeben einer Rufmeldung in einer ersten Tonversion, wenn ein mit der Rufnummer des Empfängers sich deckendes Adressierungssignal in einem empfangenen Funkrufsignal erfasst wird; einer Nachricht-Erkennungsschaltung (42) zum Analysieren eines auf die Rufnummer des Empfängers folgenden Nachrichtsignals, das als Nachrichtinformation auszugeben ist, um eine automatische Rückstellung zur automatischen Unterbrechung der Meldeoperation zu bewirken, wenn ein Rückstell-Eingabesignal nicht innerhalb einer voreingestellten Zeit während des Rufvorgangs erfasst wird, und die Nachrichtinformation in-einem Speicher als unbestätigte Nachricht abzuspeichern; einer Rufwiederholungs-Erkennungsschaltung (43) zur Feststellung, ob das Funkrufsignal ein Signal zur Rufwiederholungssteuerung enthält; und einem Rufwiederholungs-Steuergerät (44) zur periodischen Rufwiederholung in einer von der ersten verschiedenen zweiten Tonversion, wenn das Signal zur Rufwiederholungssteuerung erfasst wird und die empfangene Nachricht automatisch zurückgestellt ist, wobei das Rufwiederholungs-Steuergerät (44) die Rufwiederholung für die bestätigte Nachricht mit einem von sowohl der ersten als auch der zweiten Tonversion verschiedenen dritten Ton ausführt, bis die Rufwiederholungsfunktion für die betreffende Nachricht gelöscht wird.

2. Rufverfahren für einen Selektivfunkrufempfänger mit den Schritten:
Abgeben einer Rufmeldung in einer ersten Tonversion, wenn ein mit der Rufnummer des Empfängers sich deckendes Adressierungssignal in dem empfangenen Funkrufsignal erfasst wird;
automatisches Rückstellen zur automatischen Abschaltung der Rufmeldung, wenn ein Rückstellungseingabesignal nicht innerhalb einer voreingestellten Zeit während der Rufmeldung erfasst wird;
Abspeichern der empfangenen Nachricht im Speicher als unbestätigte Nachricht;
Feststellen, ob das Funkrufsignal ein Signal zur Rufwiederholungssteuerung enthält;
periodische Rufwiederholungsmeldung in einem von der ersten Tonversion verschiedenen zweiten Ton, wenn das Signal zur Rufwiederholungssteuerung in dem Funkrufsignal enthalten und die empfangene Nachricht automatisch zurückgestellt worden ist; und
periodische kontinuierliche Rufwiederholung mit einem von sowohl der ersten als auch der zweiten Tonversion verschiedenen dritten Ton nach Bestätigung der Nachricht, bis die Rufwiederholungsfunktion gelöscht ist.

## Revendications

1. Récepteur d'appel sélectif radio comprenant :
- des moyens d'identification d'ID (41) pour effectuer une opération d'annonce d'appel avec un premier motif sonore lorsque le signal d'adresse qui coïncide avec le numéro d'appel du récepteur est identifié dans le signal radio reçu ;
- des moyens d'identification de message (42) pour analyser le signal de message ultérieur au numéro d'appel du récepteur afin de le sortir comme des données de message, pour effectuer une remise à zéro automatique afin d'arrêter ladite opération d'annonce automatiquement lorsqu'une entrée d'opération de remise à zéro n'est pas détectée en un temps précédemment fixé durant ladite opération d'annonce, et pour mémoriser lesdites données de message dans une mémoire comme un message non confirmé ;
- des moyens d'identification d'itération d'appel (43) pour identifier si ledit signal radio inclut un signal pour une commande d'itération d'appel ; et
- des moyens de commande d'itération d'appel (44) pour effectuer une opération d'itération d'appel périodiquement avec un deuxième motif sonore, qui est différent dudit premier motif sonore, lorsque le signal pour la commande d'itération d'appel est identifié et le message reçu est remis à zéro automatiquement,
dans lequel lesdits moyens de commande d'itération d'appel (44) effectuent l'opération d'itération d'appel du message confirmé périodiquement avec un troisième motif sonore différent à la fois des premier et deuxième motifs sonores après que le message a été confirmé, jusqu'à ce que l'itération d'appel du message soit annulée.

2. Procédé d'annonce d'appel du récepteur sélectif radio, comprenant les étapes de :
- réalisation d'une opération d'annonce avec un premier motif sonore lorsqu'un signal d'adresse qui coïncide avec le numéro d'appel du récepteur est identifié dans le signal radio reçu ;
- réalisation d'une remise à zéro automatique pour arrêter automatiquement ladite opération d'annonce lorsqu'une entrée d'opération de remise à zéro n'est pas détectée en un temps précédemment fixé durant ladite opération d'annonce ;
- mémorisation du message reçu dans la mémoire comme un message non confirmé ;
- identification indiquant si ledit signal radio inclut un signal pour une commande d'itération d'appel ;
- réalisation de l'opération d'annonce d'itération d'appel périodiquement avec un deuxième motif sonore différent dudit premier motif sonore, lorsque le signal pour la commande d'itération d'appel est identifié dans ledit signal radio et le message reçu est remis à zéro automatiquement ; et
- réalisation de l'opération d'annonce d'itération d'appel du message confirmé périodiquement et de façon continue après que ledit message a été confirmé jusqu'à ce que l'itération d'appel du message soit annulée, avec un troisième motif sonore différent à la fois des premier et deuxième motifs sonores.
